# DEMANDE DE BREVET EUROPEEN

(11) **EP 1 517 471 A1**
(43) Date de publication de la demande: **23.03.2005**
(21) Numéro de dépôt: 04292075.1
(22) Date de dépôt: 23.08.2004
(51) Int. Cl.: H04L 12/18, H04L 29/06

(54) **Procédé de gestion d'un jeton dans un reseau de telecommunication**

(30) Priorité: 22.09.2003 FR 0311098
(71) Demandeur: ALCATEL, 75008 Paris (FR)
(72) Inventeur: Queau, Guylaine, 91370 Veuiers-le-Buisson (FR); Thiebaut, Laurent, 92160 Antony (FR)
(74) Mandataire: Vigand, Régis Louis Michel

(57) **Abrégé**

Procédé de gestion d'un jeton dans un réseau de télécommunication, pour attribuer un droit exclusif à un usager parmi un groupe d'usagers qui peuvent demander simultanément à bénéficier d'un même service qui consiste à :
- envoyer (1) une demande de jeton, d'un usager demandeur (EUA) à un serveur d'applications (AS) ;
- puis attribuer (2) un jeton unique, de ce serveur d'application (AS) à un usager demandeur ;
- puis envoyer (3) des données de l'usager demandeur qui a reçu le jeton vers un serveur de médium (MS) apte à transporter ces données ;
- envoyer (4), de cet usager (EUA) à ce serveur d'applications (AS), une demande de libération du jeton ;
- et enfin (5) diffuser de ce serveur d'application (AS) vers tous les usagers (EUA, ..., EUD) un message indiquant que le jeton est disponible.

## Description

L'invention concerne un procédé pour gérer un jeton dans un réseau de télécommunication. Un tel procédé est utilisé lorsqu'il est nécessaire d'attribuer un droit exclusif à un usager parmi un groupe d'usagers qui peuvent demander simultanément à bénéficier d'un même service. Par exemple, ce procédé peut être appliqué pour attribuer un tour de parole dans une conférence téléphonique, quand on veut éviter que plusieurs usagers ne prennent la parole en même temps.

On connaît un procédé pour gérer un jeton dans un réseau de téléphonie mobile de troisième génération. Ce procédé connu est implémenté au niveau de la couche dite de transport, de l'architecture en couches modélisant un tel réseau. Le protocole utilisé dans cette couche de transport est a priori destiné à transmettre des messages de signalisation spécifiques au transport des signaux de voix, et plus généralement des signaux multimédia. Il n'est pas satisfaisant pour la gestion d'un jeton : Un message de signalisation au niveau de la couche de transport peut être perdu. Un jeton peut donc être perdu, et il en résulte que le tour de parole n'est attribué à personne, jusqu'à ce qu'un mécanisme additionnel recrée un jeton (par exemple un temporisateur). En outre, ce procédé connu a pour inconvénient que la couche dite d'applications, qui gérer les applications, n'est pas informée des événements concernant le jeton puisque ces événements ont lieu dans la couche de transport.

Le but de l'invention est de remédier à ces inconvénients. L'objet de l'invention est un procédé de gestion d'un jeton dans un réseau de télécommunication, pour attribuer un droit exclusif à un usager parmi un groupe d'usagers qui peuvent demander simultanément à bénéficier d'un même service ; caractérisé en ce qu'il consiste à :
- envoyer une demande de jeton, d'un usager demandeur à un serveur d'applications ;
- puis attribuer un jeton unique, de ce serveur d'application à un usager demandeur ;
- puis envoyer des données de l'usager demandeur qui a reçu le jeton vers un serveur de médium apte à transporter ces données ;
- envoyer, de cet usager à ce serveur d'applications, une demande de libération du jeton ;
- et enfin diffuser de ce serveur d'application vers tous les usagers un message indiquant que le jeton est disponible.

Le procédé ainsi caractérisé assure une gestion plus fiable d'un jeton car la signalisation au niveau de la couche d'applications garantit mieux la remise d'un message à son destinataire. D'autre part, la gestion du jeton peut être intégrée à l'une des applications de cette couche, puisqu'elle utilise la signalisation de cette couche. Cette application connaît alors directement les événement attribution et restitution du jeton, elle peut donc coopérer plus facilement avec diverses applications destinées à fournir des services aux usagers d'un réseau de télécommunication.

Il a aussi pour avantage de libérer la couche transport de la tâche de gestion du jeton. Il en résulte finalement une plus grande efficacité de la couche transport d'une part, et de la couche application d'autre part.

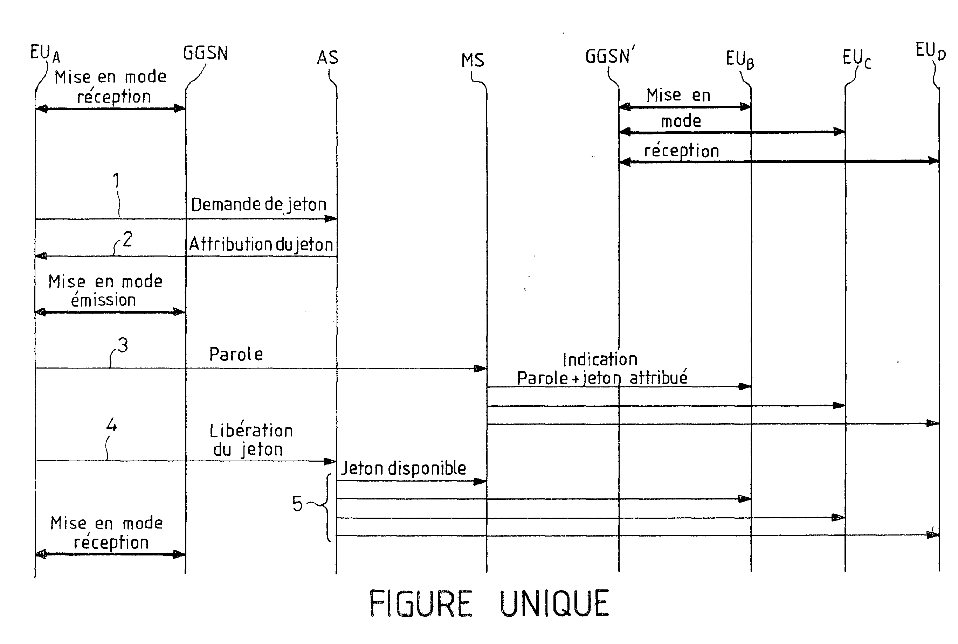

L'invention sera mieux comprise et d'autres caractéristiques apparaîtront à l'aide de la description ci-dessous et de la figure unique l'accompagnant. Considérons à titre d'exemple un réseau de téléphonie mobile de troisième génération dans lequel on met en oeuvre le procédé selon l'invention pour attribuer un tour de parole à un seul usager parmi un groupe d'usagers EU_{A}, EU_{B}, EU_{C}, EU_{D} participant à une conférence téléphonique. Le procédé est mis en oeuvre dans la couche d'applications qui s'appelle alors couche de contrôle d'appel ; et le protocole de signalisation utilisé pour cette mise en oeuvre est le protocole SIP (Session Initiation Protocole). Les entités qui interviennent dans cet exemple sont :
- deux serveurs de contrôle d'accès, GGSN et GGSN', mettant en oeuvre le protocole RTP (Real, Time Transport Protocole), le serveur GGSN desservant le terminal EU_{A} et le serveur GGSN' desservant les terminaux EU_{B}, EU_{C}, EU_{D};
- un serveur d'applications, AS ;
- et un serveur de média, MS.

Préalablement, les terminaux d'usagers EU_{A}, EU_{B}, EU_{C} EU_{D}, ont demandé de manière classique à participer, à une même conférence. Un serveur de contrôle d'accès, GGSN ou GGSN', a créé une liaison entre chacun des terminaux d'usagers EU_{A}, EU_{B}, EU_{C}, EU_{D}, et le réseau, et a initialisé ces liaisons pour que les terminaux soient en mode réception, c'est à dire qu'aucun n'ait droit au tour de parole pour le moment. Pour qu'un usager puisse parler, il doit préalablement demander à avoir la parole, en activant une fonction de son terminal UE_{A}.

Au cours d'une étape 1, le terminal UE_{A} envoie au serveur d'application AS une demande de jeton, au moyen d'un message conforme au protocole SIP, contenant l'identité du terminal UE_{A} . Le serveur d'application AS exécute un programme qui décide si ce terminal peut ou non prendre la parole à l'instant considéré, notamment en fonction du fait que le jeton (unique) est actuellement attribué ou non ; et en fonction de règles de filtrages propres à ce service (Droits de l'usager).

Au cours d'une étape 2, s'il est possible de donner la parole au terminal demandeur UE_{A}, le serveur d'application AS répond au terminal UE_{A} en lui envoyant un message qui lui attribue le jeton, c'est à dire le droit exclusif à la parole. Le serveur de contrôle d'accès GGSN est commandé par le serveur d'application AS pour mettre en mode émission la liaison entre le terminal UE_{A} et le réseau. L'usager de ce terminal peut alors parler.

Au cours d'une étape 3, le terminal UE_{A} émet des signaux de parole vers le serveur de média MS qui les diffuse vers les autres terminaux, EU_{B}, EU_{C}, EU_{D}. Dans les paquets de parole, les protocoles de transport, RTP/RTCP (Real Time Transport Protocol/ Real Time Transport Control Protocol) insèrent une information indiquant aux terminaux EU_{B}, EU_{C}, EU_{D} que le jeton a été attribué.

Au cours d'une étape 4, l'usager rend la parole. Son terminal EU_{A} envoie au serveur d'application AS un message de libération de jeton, conforme au protocole SIP et contenant l'identité du terminal UE_{A}.

Au cours d'une étape 5, le serveur d'application AS diffuse une indication de libération du jeton vers les terminaux d'usager EU_{B}, EU_{C}, EU_{D}, et le serveur de média MS ; et le serveur de contrôle d'accès GGSN est commandé par le serveur d'application AS pour remettre dans le mode réception la liaison entre le terminal EU_{B} et le réseau.

## Revendications

1. Procédé de gestion d'un jeton dans un réseau de télécommunication, pour attribuer un droit exclusif à un usager parmi un groupe d'usagers qui peuvent demander simultanément à bénéficier d'un même service ; **caractérisé en ce qu'**il consiste à :
- envoyer (1) une demande de jeton, d'un usager demandeur (EUA) à un serveur d'applications (AS) ;
- puis attribuer (2) un jeton unique, de ce serveur d'application (AS) à un usager demandeur ;
- puis envoyer (3) des données de l'usager demandeur qui a reçu le jeton vers un serveur de médium (MS) apte à transporter ces données ;
- envoyer (4), de cet usager (EUA) à ce serveur d'applications (AS), une demande de libération du jeton ;
- et enfin (5) diffuser de ce serveur d'application (AS) vers tous les usagers (EUA, ..., EUD) un message indiquant que le jeton est disponible.

2. Serveur d'application, pour la mise en oeuvre du procédé selon la revendication 1, **caractérisé en ce qu'**il comporte des moyens :
- pour recevoir (1) une demande de jeton, émise par un terminal d'usager demandeur (EUA) ;
- puis attribuer (2) un jeton unique, de ce serveur d'application (AS) à ce terminal d'usager demandeur ;
- recevoir (4) d'un terminal d'usager (EUA) une demande de libération du jeton ;
- et enfin (5) diffuser vers tous les terminaux d'usagers (EUA, ..., EUD) un message indiquant que le jeton est disponible.

3. Terminal de télécommunication, pour la mise en oeuvre du procédé selon la revendication 1, **caractérisé en ce qu'**il comporte :
- envoyer (1) une demande de jeton, à un serveur d'applications (AS) ;
- puis recevoir (2) un jeton attribué par ce serveur d'application (AS) ;
- puis envoyer (3) des données vers un serveur de médium (MS) apte à transporter ces données ;
- puis envoyer (4) à ce serveur d'applications (AS) une demande de libération du jeton ;
- et enfin (5) recevoir un message indiquant que le jeton est disponible, diffusé par ce serveur d'application (AS).
